# EUROPEAN PATENT SPECIFICATION

(11) **EP 2 542 431 B1**
(45) Date of publication and mention of the grant of the patent: **27.08.2014**
(21) Application number: 11717743.6
(22) Date of filing: 02.03.2011
(51) Int. Cl.: B60J 10/00, B60J 10/08

(54) **SEAL FOR AUTOMOTIVE VEHICLE DOOR**
KFZ-TÜRDICHTUNG
JOINT D'ÉTANCHÉITÉ POUR PORTE DE VÉHICULE AUTOMOBILE

(30) Priority: 05.03.2010 IT TO20100169
(43) Date of publication of application: 09.01.2013
(73) Proprietor: Cooper-Standard Automotive Italy S.p.A., 10073 Cirie' (Torino) (IT)
(72) Inventor: CHIATTI, Mauro, I-10073 Cirie' (Torino) (IT)
(74) Representative: Quinterno, Giuseppe
(86) International application number: PCT/IB2011/050885
(87) International publication number: WO 2011/107947

(56) References cited:
- DE-T2- 60 120 854
- GB-A- 2 334 288
- US-A1- 2004 137 197
- US-A1- 2006 112 645

## Description

The present invention relates in a general way to sealing strips for motor vehicles.

More specifically, the invention relates to a sealing strip for the edge of an opening in the bodywork of a motor vehicle which is associated with a door which is swingable between an open and a closed position about an at least approximately vertical axis, wherein the edge of said opening comprises an upper portion and a lower portion connected by a first and a second lateral portion which are, respectively, close to and remote from said axis.

In particular, the invention proposes a strip of the type defined in the preamble of claim 1.

Sealing strips of that kind are disclosed in US 20040137197 A1.

Similar sealing strips are disclosed in DE 60120854 T.

EP 0 115 750 A1 describes an extruded elastomeric strip of this type in which the tubular sealing section has a wall thickness increased in the parts of the strip intended to be coupled to corner parts of the edge of the corresponding opening of the motor vehicle, in order to resolve sealing problems and rectify the appearance of the sealing section in these corner parts.

FR 2 862 574-A discloses a similar sealing strip for motor vehicles in which, in order to reduce the transmission to the passenger compartment of low-frequency noise generated by the bodywork, the wall thickness of the sealing section is increased locally only at the ends of the upper portion of the opening in the bodywork, and is reduced in the intermediate part lying between said ends. This solution may give rise to problems of water-, air- and dust-tightness, and may lead to the penetration of external noise into the passenger compartment, in said upper portion of the opening in the bodywork.

EP 0 407 364 A1 discloses an extruded sealing strip in which the tubular sealing section has a wall thickness which is essentially constant over the whole length of the strip, but with an enlarged cross section in critical parts of the edge of the corresponding opening in the bodywork of the motor vehicle.

Sealing strips of the type described initially have now been found to present a number of problems.

In the first place, in order to provide effective water-, air- and dust-tightness, the sealing section should be made in such a way that its contact pressure against the door is fairly high. However, in order to minimize the force (or energy) required to close the door, the sealing section of the strip should offer the least possible resistance to its deformation by the door when the door is closed.

Thus these two requirements, that is to say the effectiveness of the sealing action and the reduction of the energy required to close the door, conflict with each other.

According to another design requirement, it is desirable for a sealing strip of the type specified above to be capable of providing maximum attenuation of the external noise that tends to penetrate into the motor vehicle.

As regards the sealing action, particularly in relation to water, this requirement is more marked in the front and rear portions of the opening in the bodywork of the motor vehicle, because of the greater exposure of these portions to potential infiltration in static conditions and, especially, in dynamic conditions. This will become clearer if it is considered that, in general, when the vehicle moves at high speed, the air pressure in the passenger compartment tends to be greater than the outside pressure, owing to aerodynamic effects, and therefore the pressure difference tends to move the doors away from their associated sealing strips which are fixed to the corresponding openings in the bodywork of the motor vehicle.

One object of the present invention is to provide an extruded sealing strip which behaves in an optimal way, thus meeting the different requirements, including the aforementioned conflicting requirements, in the various portions of the opening in the bodywork of a motor vehicle.

This and other objects are achieved according to the invention with a sealing strip of the type described above, having the features defined in claim 1.

The increased wall thickness of the sealing section of the strip in the upper portion of the opening in the bodywork of the vehicle substantially improves the effectiveness of the sealing action in relation to water, air and dust in the portion which is known to be more exposed to risks of infiltration. At the same time, this increase in the wall thickness provides better attenuation of the noise which tends to infiltrate into the passenger compartment from the outside. The attenuation of the external noise is further increased by the absence of air vent apertures in the sealing section in the upper portion of the strip, which is closest to the passengers' ears when the vehicle is in use, and is therefore more critical in terms of noise penetration.

The reduction of the wall thickness of the tubular sealing section in the lower and lateral portions of the seal makes it possible to reduce the energy required to close the door. The absence of vent apertures in the lower portion and in the lateral portion of the strip closer to the axis of the swing of the door helps to provide a further reduction in the noise transmitted into the passenger compartment.

Further features and advantages of the invention will be made clear by the following detailed description, provided purely by way of non-limiting example, with reference to the appended drawings, in which:
Figure 1 is a partial side view of the bodywork of a motor vehicle having an opening for a side door, this opening being provided with a sealing strip according to the present invention;
Figures 2 to 4 are partial sectional views taken essentially through the lines II-II, III-III and IV-IV respectively in Figure 1; and
Figures 5 and 6 are cross-sectional views of two sealing strips according to the invention, showing the variation of the wall thickness of the tubular sealing section.

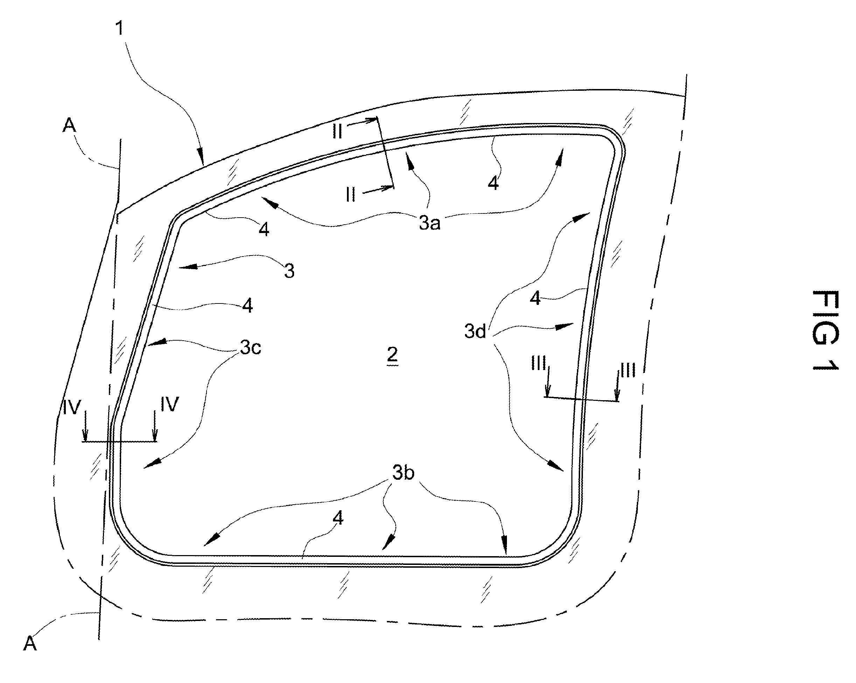

With reference to Figure 1, the number 1 indicates the whole of the bodywork of a motor vehicle, such as a motor car, which has an opening 2. In the illustrated exemplary embodiment, the opening 2 is an opening for a front side door (not shown) of the motor vehicle.

In the following description, it is assumed that the door associated with the opening 2 can be swung in a known way between an open and a closed position, about an at least approximately vertical axis, indicated by A-A in Figure 1.

The opening 2 has an edge 3 which comprises an upper portion 3a and a lower portion 3b, connected by a first lateral portion 3c and by a second lateral portion 3d, which are, respectively, close to and remote from the axis A-A.

An extruded sealing strip, indicated as a whole by 4, is fixed to the edge 3 of the opening 2.

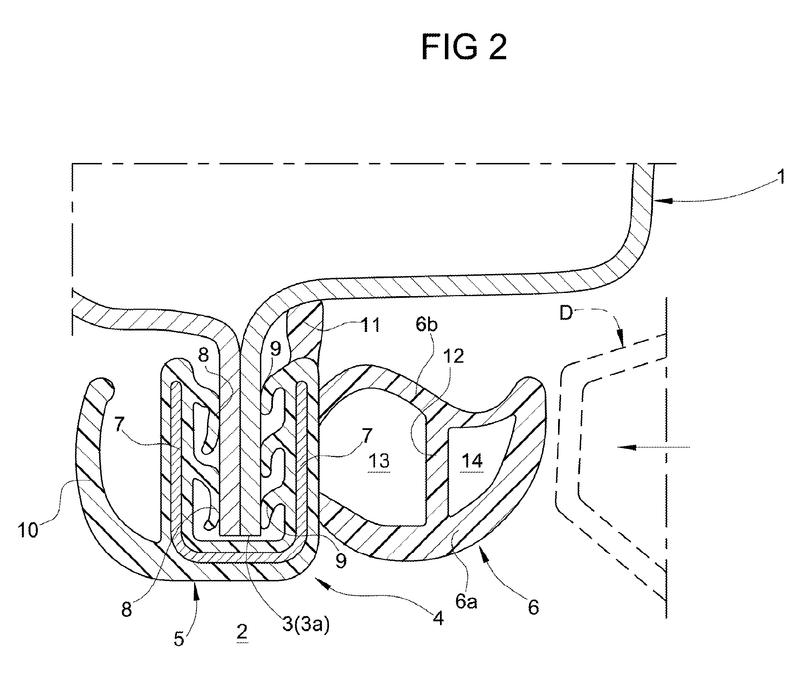

With reference to Figure 2 for example, the strip 4 comprises an anchoring section 5, essentially U-shaped or channel shaped, made from an elastomeric material, to which is connected a tubular sealing section 6, made for example from cellular elastomeric material and coextruded with the anchoring section 5.

In the illustrated exemplary embodiment, the anchoring section 5 comprises a core 7, made from metal for example, which is incorporated in the section during extrusion.

The anchoring section 5 contains two opposing arrays of flexible retaining fins 8 and 9, which engage with opposite sides of the flanged edge 3 of the opening 2 in the bodywork of the motor vehicle.

In the illustrated exemplary embodiment, the anchoring section 5 also has a lateral wing 10, facing the inside of the motor vehicle when in use, and a sealing fin 11 (see Figure 2, for example).

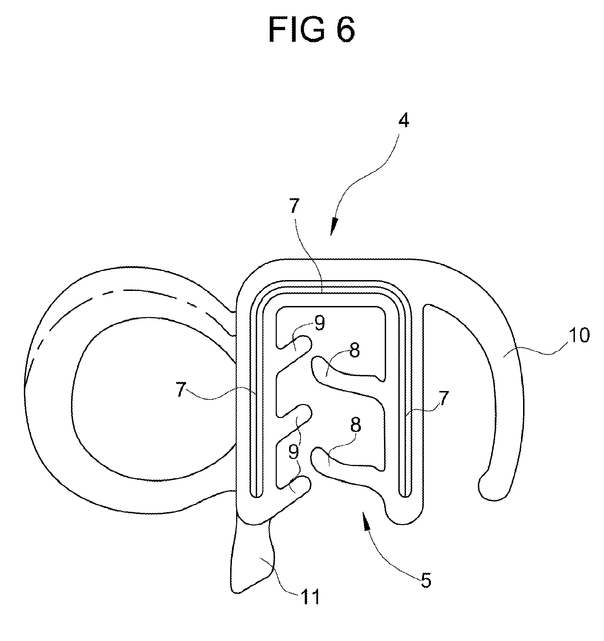

The tubular sealing section 6 in the illustrated exemplary configuration has an intermediate longitudinal partition 12, which divides its internal region into two adjacent chambers 13 and 14 (although the presence of the intermediate partition 12 is not strictly necessary). Additionally, the peripheral wall of the sealing section 6 comprises a curved and externally convex portion of wall or half-wall 6a, which is connected to a portion of wall or half-wall 6b which has a sinuous profile in cross section and is externally convex in its root or proximal part and externally concave in its distal part. However, this configuration is not strictly necessary, since the sealing section 6 can also have a simple rounded shape as shown in Figure 6.

With reference to Figure 2, the distal part of the convex curved wall 6a is intended to be engaged by the door D of the motor vehicle, which is partially shown in broken lines in this drawing.

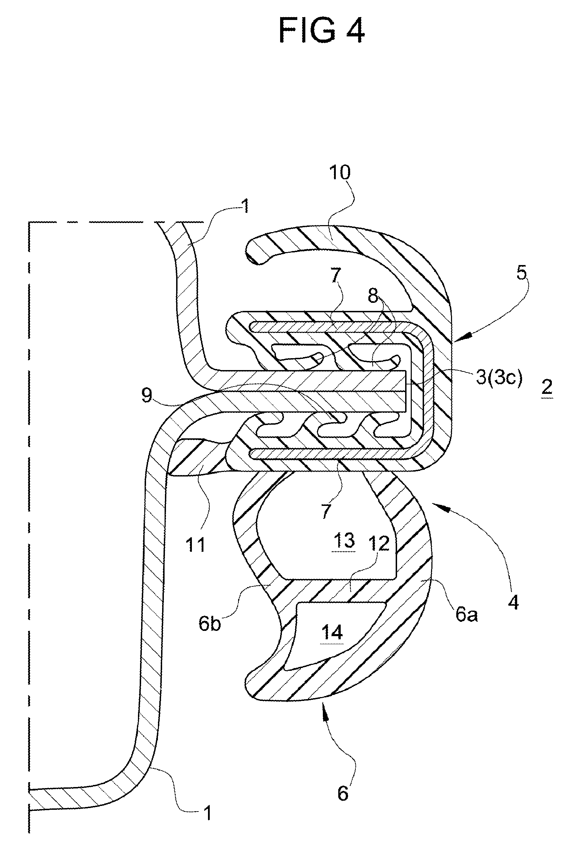

According to the present invention, the sealing section of the strip 4 has an increased thickness (towards the outside and/or towards the inside) in its wall part 6a at least, in the upper portion 3a of the strip only, and a reduced wall thickness in the lower portion 3b and lateral portions 3c, 3d of the strip. A visual comparison of Figures 2, 3 and 4 will make this clear.

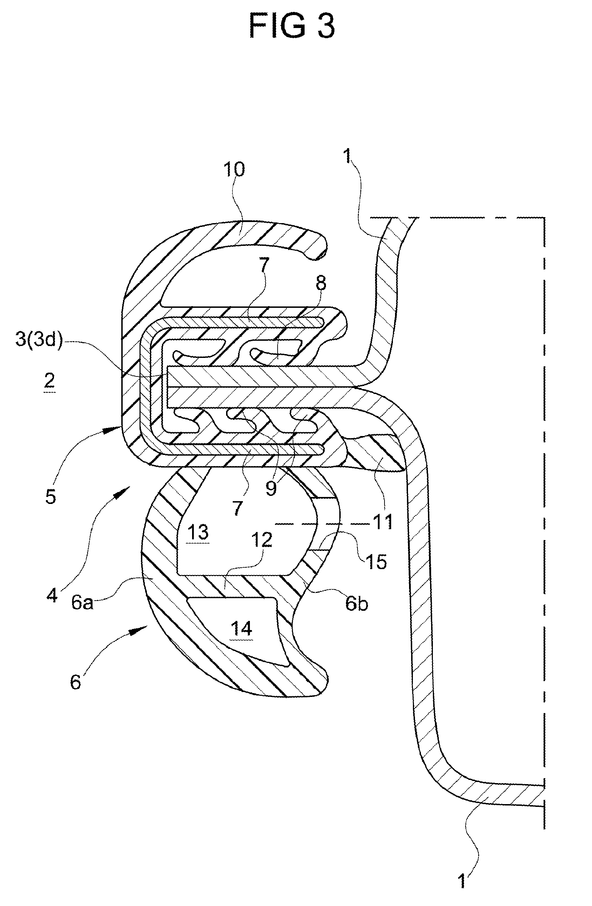

Additionally, and only in the part of the strip 4 applied to the lateral portion 3d of the edge of the opening 2 which is remote from the axis A-A, the tubular sealing section 6 has a plurality of vent holes 15 (Figure 3) adapted to vent towards the outside the air contained in the chamber 13 of this section when the latter is squeezed by the closing of the door D. The apertures 15 can be through holes and can be, for example, circular or elongated in the form of slots. These holes or apertures can be made, for example, by mechanical cutting, or by removal of material by a laser beam.

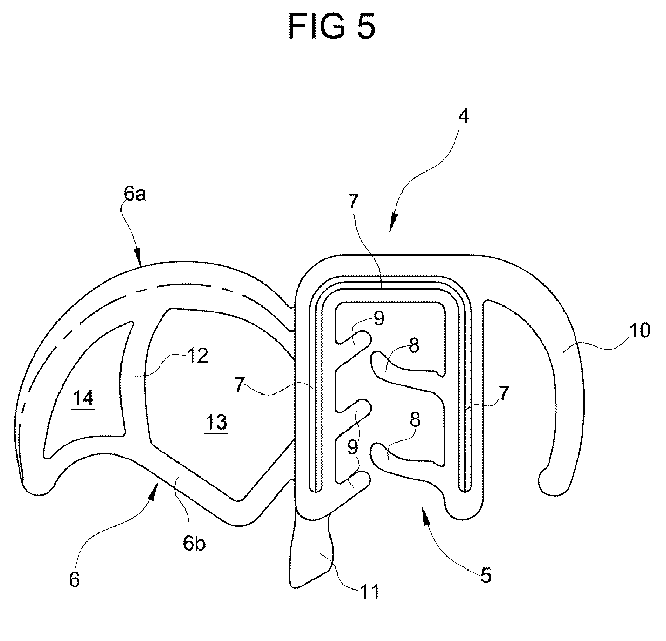

Figure 5 shows the extent of variation of the wall thickness of the sealing strip 6, particularly in its wall portion 6a: in this drawing, the external contour of the wall 6a shown in solid lines is that which is present next to the upper portion 3a of the edge of the opening 2 of the motor vehicle, while the profile shown below in broken lines indicates the outer contour of the sealing section 6 in the parts of the strip applied to the portions 3b-3d of said opening in the bodywork of the motor vehicle.

The extruded sealing strip according to the invention provides an optimal way of meeting the requirements, including the conflicting requirements, described in the introduction of the present description: the parts of the strip to be applied to the lower portion 3b and lateral portions 3c, 3d of the edge of the opening 2 of the motor vehicle are "lightened" by the reduction of the wall thickness of the sealing section 6. This makes it possible to reduce the energy required to close the door.

On the other hand, the thickening of the wall of the sealing section 6 towards the outside and/or towards the inside, next to the upper portion 3a of the edge 3 of the opening 2, improves the effectiveness of the sealing action and the attenuation of the external noise.

The provision of vent apertures only in the part of the strip 4 to be applied to the lateral portion 3d (remote from the axis A-A of the swing of the door) further limits the level of the noise which can reach the inside of the motor vehicle from the outside.

Naturally, the principle of the invention remaining the same, the forms of embodiment and the details of construction may be varied widely with respect to those described and illustrated, which have been given purely by way of non-limiting example, without thereby departing from the scope of the invention as defined by the attached claims.

In particular, the invention is not limited to a sealing strip for a front side door, but is equally applicable to rear side doors, and more generally to any other type of hinged door or hatch.

## Claims

1. Sealing strip (4) for the edge (3) of an opening (2) of the bodywork (1) of a motor vehicle, this opening being associated with a door (D) which is swingable between an open and a closed position about an at least approximately vertical axis (A-A), wherein the edge (3) of said opening (2) comprises an upper portion (3a) and a lower portion (3b) which are connected by a first and a second lateral portion (3c, 3d) which are respectively close to and remote from said axis (A-A);
the sealing strip (4) comprising an anchoring section (5) to which is connected a tubular sealing section (6) which is intended to interact with the door (D);
the sealing section (6) having a plurality of vent openings (15) adapted to allow the venting toward the outside of the air contained therein when said sealing strip (6) is squeezed by the closing of the door (D);
the sealing section having a cross section adapted to apply to the door (D), when the latter is closed;
the sealing strip (4) being **characterized in that** the sealing section (6) has an increased wall thickness over the entire part of the strip (4) which is to be applied to the upper portion (3a) of said edge (3), and a reduced wall thickness in the parts to be applied to the lower (3b) and lateral portions (3c, 3d) of said edge (3),
wherein said vent openings (15) of the sealing section (6) are provided only **in that** part of the strip (4) which is to be applied to the aforesaid second lateral portion (3d) of the edge (3),
resulting in an increased contact pressure over the entire part of the strip (4) which is to be applied the upper portion (3a) of said edge (3), and a reduced contact pressure on the parts which are to be applied to the lower (3b) and side portions (3c, 3d) of said edge (3).

2. Sealing strip according to Claim 2, manufactured as an extruded strip, wherein the variations of the cross section or the wall thickness of the sealing profile (6) are obtained in the extrusion of the strip (4).

3. Sealing strip according to one of the preceding claims, wherein the peripheral wall of the sealing section (6) has two wall portions or half-walls (6a, 6b) which in the condition of use extend from the sealing section (5) towards the door (D), and wherein at least one of said wall portions or half-walls (6a, 6b) has an increased thickness in the part of the strip (4) which is intended to be applied to the aforesaid upper portion (3a) of the edge (3) of the opening (2) of the motor vehicle bodywork.

4. Sealing strip according to Claim 3, wherein a part of the wall or half-wall (6a) of the sealing section (6) has an outer curved and convex profile.

5. Sealing strip according to one of the preceding claims, wherein the sealing section (6) has an internal longitudinal partition (12) which divides its internal region into two adjacent chambers (13, 14).

## Patentansprüche

1. Dichtungsband (4) für den Rand (3) einer Öffnung (2) der Karosserie (1) eines Kraftfahrzeugs, wobei diese Öffnung einer Tür (D) zugeordnet ist, welche um eine wenigstens näherungsweise vertikale Achse (A-A) zwischen einer offenen und einer geschlossenen Position schwenkbar ist, wobei der Rand (3) der Öffnung (2) einen oberen Abschnitt (3a) und einen unteren Abschnitt (3b) umfasst, welche durch einen ersten und einem zweiten lateralen Abschnitt (3c, 3d) verbunden sind, welche jeweils nahe bzw. entfernt von der Achse (A-A) sind;
wobei das Dichtungsband (4) einen Verankerungsabschnitt (5) umfasst, mit welchem ein rohrförmiger Dichtungsabschnitt (6) verbunden ist, welcher dazu vorgesehen ist, mit der Tür (D) zu wechselwirken;
wobei der Dichtungsabschnitt (6) eine Mehrzahl von Entlüftungsöffnungen (15) aufweist, welche dazu eingerichtet sind, das Auslassen der darin enthaltenen Luft in Richtung der Umgebung zu erlauben, wenn das Dichtungsband (6) durch das Schließen der Tür (D) zusammengedrückt wird;
wobei der Dichtungsabschnitt einen Querschnitt aufweist, welcher dazu eingerichtet ist, der Tür (D) zu entsprechen, wenn letztere geschlossen ist;
wobei das Dichtungsband (4) **dadurch gekennzeichnet ist, dass** der Dichtungsabschnitt (6) eine erhöhte Wanddicke über den gesamten Teil des Bandes (4), welcher auf dem oberen Abschnitt (3a) des Rands (3) anzubringen ist, und eine verringerte Wanddicke in den Teilen, welche auf dem unteren (3b) und den lateralen Abschnitten (3c, 3d) des Rands (3) anzubringen sind, aufweist,
wobei die Entlüftungsöffnungen (15) des Dichtungsabschnitts (6) nur in dem Teil des Bandes (4) bereitgestellt sind, welcher an dem zuvor genannten zweiten lateralen Abschnitt (3d) des Rands (3) anzubringen ist, was zu einem erhöhten Kontaktdruck über den gesamten Teil des Bandes (4) führt, welcher an dem oberen Abschnitt (3a) des Rands (3) anzubringen ist, und einem verringerten Kontaktdruck an den Teilen, welche an dem unteren (3b) und den seitlichen Abschnitten (3c, 3d) des Rands (3) anzubringen sind.

2. Dichtungsband nach Anspruch 1, welches als extrudiertes Band hergestellt ist, wobei die Variationen des Querschnitts oder der Wanddicke des Dichtungsprofils (6) bei der Extrusion des Bandes (4) erhalten werden.

3. Dichtungsband nach einem der vorhergehenden Ansprüche, wobei die periphere Wand des Dichtungsabschnitts (6) zwei Wandabschnitte oder Halb-Wände (6a, 6b) aufweist, welche sich in dem Zustand einer Verwendung von dem Dichtungsabschnitt (5) in Richtung der Tür (D) erstrecken, und wobei wenigstens einer der Wandabschnitte oder eine der Halb-Wände (6a, 6b) eine erhöhte Dicke in dem Teil des Bandes (4) aufweist, welcher dazu vorgesehen ist, an dem zuvor genannten oberen Abschnitt (3a) des Rands (3) der Öffnung (2) der KraftfahrzeugKarosserie angebracht zu werden.

4. Dichtungsband nach Anspruch 3, wobei ein Teil der Wand oder Halb-Wand (6a) des Dichtungsabschnitts (6) ein gekrümmtes oder konvexes Außenprofil aufweist.

5. Dichtungsband nach einem der vorhergehenden Ansprüche, wobei der Dichtungsabschnitt (6) eine interne longitudinale Unterteilung (12) aufweist, welche seinen Innenbereich in zwei benachbarte Kammern (13, 14) unterteilt.

## Revendications

1. Bande d'étanchéité (4) pour le bord (3) d'une ouverture (2) de la carrosserie (1) d'un véhicule à moteur, cette ouverture étant associée à une porte (D) qui peut pivoter entre une position ouverte et une position fermée autour d'un axe au moins approximativement vertical (A-A), le bord (3) de ladite ouverture (2) comprenant une partie supérieure (3a) et une partie inférieure (3b) qui sont reliées par une première et une deuxième partie latérale (3c, 3d) qui sont respectivement proche et distante dudit axe (A-A) ;
la bande d'étanchéité (4) comprenant une section d'ancrage (5) à laquelle est connectée une section d'étanchéité tubulaire (6) qui est destinée à interagir avec la porte (D) ;
la section d'étanchéité (6) comportant une pluralité d'ouvertures d'aération (15) adaptées pour permettre l'aération vers l'extérieur de l'air contenu dans cette dernière quand ladite bande d'étanchéité (6) est comprimée par la fermeture de la porte (D) ;
la section d'étanchéité ayant une section transversale adaptée pour s'appliquer à la porte (D), quand cette dernière est fermée ;
la bande d'étanchéité (4) étant **caractérisée en ce que** la section d'étanchéité (6) a une épaisseur de paroi augmentée sur toute la partie de la bande (4) qui doit être appliquée à la partie supérieure (3a) dudit bord (3), et une épaisseur de paroi réduite dans les parties à appliquer sur les parties inférieure (3b) et latérales (3c, 3d) dudit bord (3),
dans laquelle lesdites ouvertures d'aération (15) de la section d'étanchéité (6) ne sont placées que dans la partie de la bande (4) qui doit être appliquée sur ladite deuxième partie latérale (3d) du bord (3), ce qui se traduit par une pression de contact augmentée sur toute la partie de la bande (4) qui doit être appliquée sur la partie supérieure (3a) dudit bord (3), et par une pression de contact réduite sur les parties qui doivent être appliquées sur les parties inférieure (3b) et latérales (3c, 3d) dudit bord (3).

2. Bande d'étanchéité selon la revendication 2, fabriquée sous la forme d'une bande extrudée, dans laquelle les variations de la section ou de l'épaisseur de paroi du profil d'étanchéité (6) sont obtenues lors de l'extrusion de la bande (4).

3. Bande d'étanchéité selon l'une des revendications précédentes, dans laquelle la paroi périphérique de la section d'étanchéité (6) comporte deux parties de paroi ou demi parois (6a, 6b) qui, en condition d'utilisation, s'étendent de la section d'étanchéité (5) vers la porte (D), et dans laquelle au moins l'une desdites parties de paroi ou demi parois (6a, 6b) a une épaisseur augmentée dans la partie de la bande (4) qui est destinée à être appliquée à ladite partie supérieure (3a) du bord (3) de l'ouverture (2) de la carrosserie de véhicule à moteur.

4. Bande d'étanchéité selon la revendication 3, dans laquelle une partie de la paroi ou demi paroi (6a) de la section d'étanchéité (6) a un profil extérieur courbé et convexe.

5. Bande d'étanchéité selon l'une des revendications précédentes, dans laquelle la section d'étanchéité (6) comporte une cloison longitudinale intérieure (12) qui divise sa région intérieure en deux chambres adjacentes (13, 14).
